# EUROPÄISCHE PATENTSCHRIFT

(11) **EP 1 258 662 B1**
(45) Veröffentlichungstag und Bekanntmachung des Hinweises auf die Patenterteilung: **07.03.2007**
(21) Anmeldenummer: 02010929.4
(22) Anmeldetag: 16.05.2002
(51) Int. Cl.: F16K 5/20

(54) **Vorrichtung zum Absperren von von Fluiden durchströmten Rohrleitungen mittels eines kugelförmigen Verschlusskörper**
Device for shutting off a fluid flow in a pipeline by a a ball-shaped shut-off member
Dispositif d'arrêt de fluide dans un conduit par un corps de fermeture sphérique

(30) Priorität: 17.05.2001 DE 10124323
(43) Veröffentlichungstag der Anmeldung: 20.11.2002
(73) Patentinhaber: Weinhold, Karl Dipl.-Ing. (FH), D-41464 Neuss (DE)
(72) Erfinder: Weinhold, Karl Dipl.-Ing. (FH), D-41464 Neuss (DE)
(74) Vertreter: Cohausz & Florack

(56) Entgegenhaltungen:
- EP-A- 0 161 056
- EP-A- 0 547 381
- EP-A- 0 919 750
- DE-A- 2 938 265
- DE-A- 19 544 901
- US-A- 3 648 970
- US-A- 4 575 045
- US-A- 5 169 123

## Beschreibung

Die Erfindung betrifft eine Vorrichtung zum Absperren von von Fluiden durchströmten Rohrleitungen, insbesondere Hochdruckrohrleitungen, bei der wenigstens ein kugelförmiger Verschlusskörper in einem Gehäuse um eine senkrecht zur Rohrleitung verlaufende Achse drehbar gelagert ist, mit einem Dichtelement zum Abdichten des kugelförmigen Verschlusskörpers gegen die Rohrleitung wobei um den kugelförmigen Verschlusskörper herum ein beidseitig auf Flächen mit Druck beaufschlagbarer, axial verschiebbarer einteiliger Dichtkolben angeordnet ist und wobei zur Abdichtung das Dichtelement vom Dichtkolben auf den kugelförmigen Verschlusskörper gepresst wird.

Solche Absperrvorrichtungen sind bekannt. So beschreibt das deutsche Gebrauchsmuster 299 05 414 einen gattungsgemäßen Kugelhahn. Ein solcher Kugelhahn ist ab einer bestimmten Nennweite der Rohrleitung, beispielsweise größer 60 mm, und einem bestimmten Betriebsdruck nicht mehr verwendbar. Durch den in der Rohrleitung herrschenden Druck des Fluids wird die Kugel des Kugelhahns stark auf den Dichtring gepresst. Es entsteht Reibschluss zwischen Kugel und Dichtring. Soll die Kugel wieder in ihre durchlässige Stellung gedreht werden, muss dieser Reibschluss überwunden werden. Das hierfür notwendige Drehmoment muss entweder durch einen Hebel oder über ein Getriebe eingeleitet werden. Das auf diese Weise einleitbare Drehmoment reicht allerdings zur Überwindung des Reibschlusses nicht aus. Auch eine Verlängerung des Hebels kann keine Abhilfe schaffen. Unter Druck kann ein solcher Kugelhahn also nicht mehr betätigt werden.

Zur Lösung dieser Probleme sind bereits verschiedene konstruktive Maßnahmen unternommen worden. Beispielsweise wurde versucht, die Problematik mit einem Bypass, einem sogenanntem Hilfsdruckausgleich, zu lösen. Alle diese Konstruktionen sind allerdings in ihrer Ausführung kompliziert oder mit Nennweitenreduzierungen in den Rohrleitungen verbunden, die sich nachteilig auf die Funktion dieser bekannten Absperrvorrichtungen auswirken.

So ist aus der DE 29 38 265 A1 eine gattungsgemäße Vorrichtung zum Absperren von von Fluiden durchströmten Rohrleitungen mit den Merkmalen des Oberbegriffes von Patentanspruch 1 bekannt. Auch wird bereits eine Entlastung des Kugelhahnes beim Drehen erreicht, jedoch mit einem relativ großen konstruktiven Aufwand, indem das Dichtungssystem aus einem dreistufigen Kolben besteht, dessen einzelne Stufen mit unterschiedlichen Dichtungen gegen das Gehäuse abgedichtet sind.

Bei der aus der EP-A1-0 547 381 bekannten Vorrichtung wird das unter Druck stehende Medium lediglich durch einen dünnen Kanal hinter den Dichtring geleitet, um diesen dann in Achsrichtung von der Kugel wegzubewegen. Dieser bekannte Kugelhahn besitzt einen gravierenden Nachteil, denn die Druckentlastung tritt nur dann ein, wenn der druckabgewandte Teil luftleer ist, das heißt mit Medium gefüllt ist. Geht man davon aus, dass sich der Kugelhahn in einem abgesperrten Zustand befindet, und auf dem abgesperrten Teil ein Druck von beispielsweise 300 bar lastet, der druckabgewandte Teil jedoch unter Umständen leergelaufen ist, so muss dieser durch den dünnen Kanal erst wieder vollständig gefüllt werden, damit sich der Druck hinter dem Dichtring aufbaut. Erst dann kann eine eventuelle Entlastung erzielt werden. Dies bedeutet jedoch für die Praxis, dass bedingt durch den kleinen Querschnitt des dünnen Kanals, der nicht mehr als einen "Bypass" darstellt, bei leerer Leitung stundenlang kein Schaltvorgang geschehen könnte, sondern erst dann, wenn die Leitung wieder vollständig gefüllt ist. Für eine funktionsgerechte Handhabung ist der bekannte Hahn in der dargestellten Konstruktion also überhaupt nicht zu gebrauchen.

Der Erfindung liegt daher die Aufgabe zugrunde, eine Vorrichtung der eingangs genannten und zuvor näher beschriebenen Art so auszugestalten und weiterzubilden, dass eine Betätigung der Vorrichtung auch unter Druck zuverlässig möglich ist.

Diese Aufgabe wird bei einer Vorrichtung gemäß dem Oberbegriff des Anspruchs 1 dadurch gelöst, dass die Flächen des Dichtkolbens Stirnflächen sind, dass wenigstens ein Kanal die beiden Ringräume des Dichtkolbens miteinander verbindet und mit einem Absperrventil versehen ist.

Wird das Ventil in geschlossener Stellung des kugelförmigen Verschlusskörpers betätigt, so erfolgt ein Druckausgleich zwischen den Stirnflächen des Dichtkolbens. Der Druck, mit dem der Dichtring durch den Dichtkolben auf den kugelförmigen Verschlusskörper gedrückt wird, wird durch den Gegendruck auf der gegenüberliegende Stirnseite ausgeglichen und der Reibschluss reduziert, so dass der Verschlusskörper wieder manuell gedreht werden kann.

Eine weitere Lehre der Erfindung sieht vor, dass das Dichtelement in geöffneter Stellung der Vorrichtung von einer Feder axial gegen den kugelförmigen Verschlusskörper gedrückt wird. Das Andrücken des Dichtelements kann auch schon vor der Druckbeaufschlagung erfolgen. Als Dichtelement für den kugelförmigen Verschlusskörper kann ein mit einem Dichtkolben verbundener Dichtring verwendet werden.

In weiterer Ausführung der Erfindung kann das Absperrventil von einem Hebel betätigt werden, der gemäß einer weiteren Lehre der Erfindung eine Schaltsperre für den mit dem kugelförmigen Verschlusskörper wirksam verbundenen Betätigungshebel aufweisen kann. Bei der Schaltsperre kann es sich beispielsweise um ein Rastelement handeln. Die Schaltsperre kann mit einer Scheibe verrasten, die mit dem Betätigungshebel des Verschlusskörpers verbunden sein kann.

Des weiteren können Anschlussstücke zum Anschließen der Vorrichtung an Rohrleitungsenden vorhanden sein, die mit der Vorrichtung verschraubt sein können. Weiterhin ist es vorteilhaft, dass die Vorrichtung einen modularen Aufbau aufweist. Der Dichtkolben und das Dichtelement können vor dem Einbringen des kugelförmigen Verschlusskörpers montiert werden, und der kugelförmige Verschlusskörper vor der Montage der Anschlussstücke von unten in die Vorrichtung eingebaut werden.

Die Erfindung wird nachfolgend anhand einer lediglich ein bevorzugtes Ausführungsbeispiel darstellenden Zeichnung näher erläutert. In der Zeichnung zeigen
- Fig. 1: eine erfindungsgemäße Vorrichtung im Längsschnitt,
- Fig. 2: die erfindungsgemäße Vorrichtung, aufgeschnitten in Draufsicht,
- Fig. 3: die erfindungsgemäße Vorrichtung in Seitenansicht, und
- Fig. 4: die erfindungsgemäße Vorrichtung in Draufsicht.

Im dargestellten und in soweit bevorzugten Ausführungsbeispiel ist die erfindungsgemäße Vorrichtung aus mehreren Bauelementen zusammengesetzt. Hierbei handelt es sich um einen Grundkörper 1, zwei mit Montageschrauben 2 am Grundkörper 1 befestigte Anschlussstücke 3 und eine ebenfalls mit Montageschrauben 2' am Grundkörper 1 befestigte Bodenplatte 4.

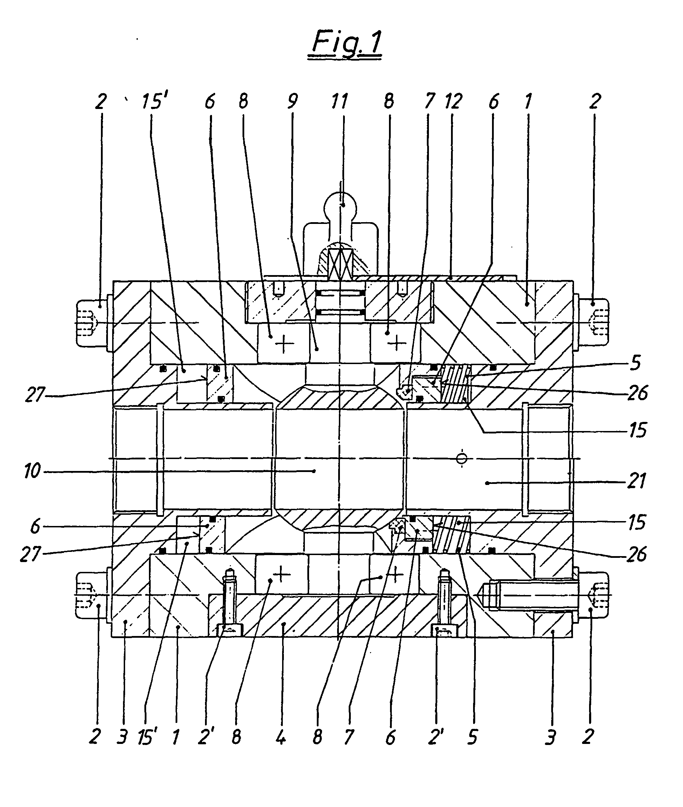

Wie aus Fig. 1 hervorgeht, sind in den Grundkörper 1 ein einseitig von einer Feder 5 beaufschlagter Dichtkolben 6 und ein Dichtring 7 sowie Lager 8 zur Aufnahme einer Welle 9 eingesetzt. Der Dichtkolben 6 ist dabei in der oberen Hälfte der Zeichnung in einer entlasteten oder im Druckausgleich befindlichen Position und in der unteren Hälfte der Zeichnung in einer an einen kugelförmigen Verschlusskörper 10 angedrückten Position dargestellt, wobei zur Verdeutlichung der unterschiedlichen Zustände das Dichtelement 7 in der entlasteten Position vom Verschlusskörper 10 abgehoben dargestellt ist.

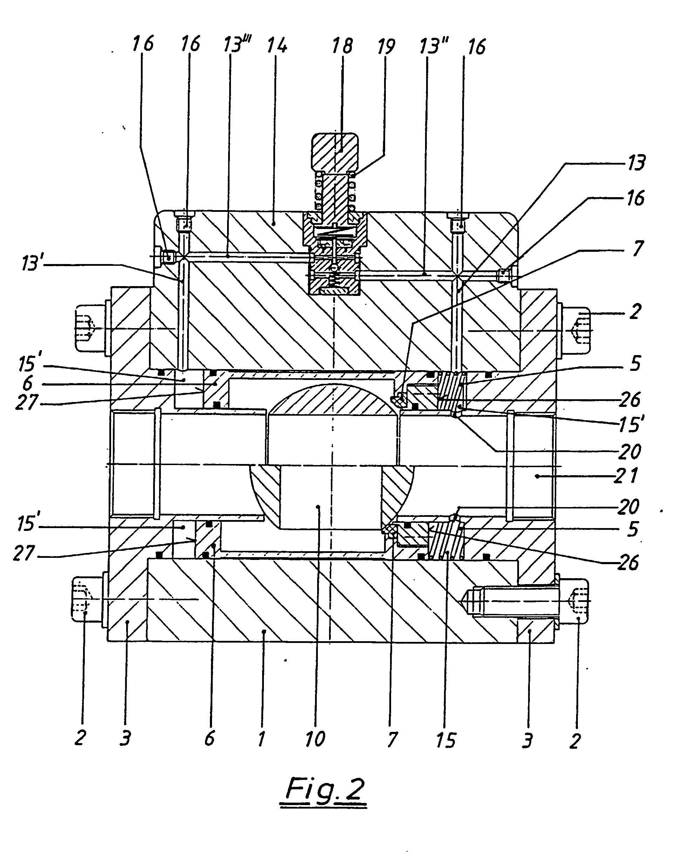

Der kugelförmige Verschlusskörper 10 ist mit der Welle 9 wirksam verbunden. Auf der im oberen Bereich aus dem Grundkörper 1 heraustretenden Welle 9 ist ein Handhebel 11 montiert. In Verbindung mit der Welle 9 befindet sich unter dem Handhebel 11 eine Scheibe 12 als Hebelführung. In Fig. 2 ist in der oberen Hälfte der Zeichnung die geöffnete Stellung des Verschlusskörpers 10 und in der unteren Hälfte der Zeichnung die geschlossene Stellung des Verschlusskörpers 10 dargestellt, wobei zur Verdeutlichung der unterschiedlichen Zustände das Dichtelement 7 in der geöffneten Stellung vom Verschlusskörper 10 abgehoben wiedergegeben ist.

Zwischen den Anschlussstücken 3 ist eine einen Kanal (Bohrungen 13, 13', 13'' und 13''') aufweisende Seitenwand 14 montiert. Zwei der Bohrungen 13 und 13' führen von der Außenseite der Seitenwand 14 durchgängig bis zu den Kolbenringraumbereichen 15 und 15' des Dichtkolbens 6. Rechtwinklig zu den Bohrungen 13 und 13' und mit ihnen in Verbindung stehend sind zwei weitere Bohrungen 13'' und 13''' angeordnet. Die Öffnungen der Bohrungen 13 bis 13''' mit den Außenseiten der Seitenwand 14 sind durch Verschlussschrauben 16 abgedichtet. Zwischen den Bohrungen 13'' und 13''' ist ein Absperrventil 17 angeordnet, welches in seiner Grundstellung die beiden Bohrungen 13'' und 13''' voneinander trennt und in eine (nicht näher bezeichnete) dafür vorgesehene Aussparung in der Seitenwand 14 eingelassen ist. Die Betätigung des Absperrventils 17 erfolgt mittels einem Hebel 18, der mit einer Feder 19 in Grundstellung gehalten wird.

Der Kolbenringraumbereich 15 nimmt die Feder 5 auf und ist über eine Mehrzahl umlaufender Bohrungen 20 mit dem eigentlichen Leitungsraum 21 verbunden.

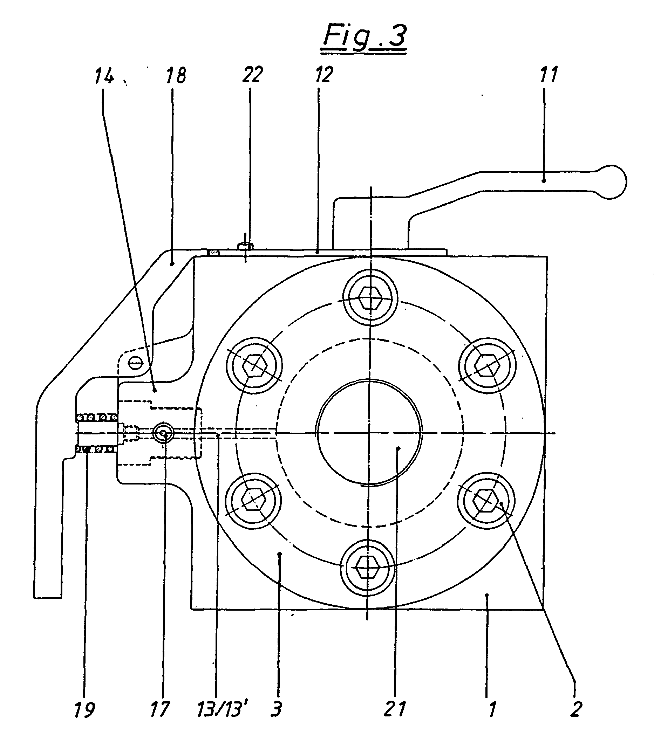

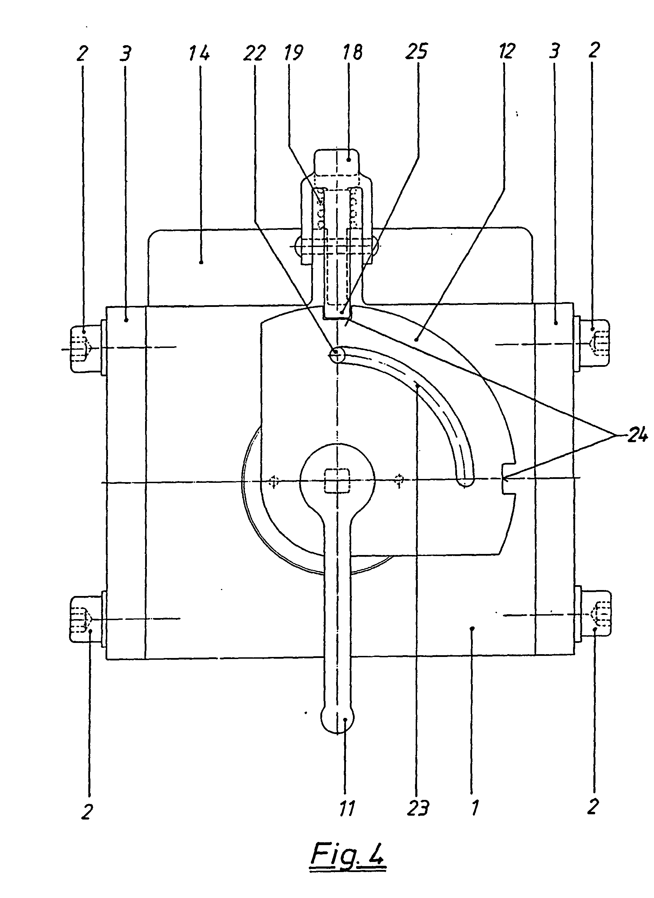

In Fig. 3 ist zusätzlich zu den schon beschriebenen Bauteilen eine Scheibenführung 22 dargestellt. Ihre Funktion wird in Fig. 4 deutlich. Durch sie wird der Schaltwinkel des Handhebels 11 mittels dem Führungsweg 23, der in der Scheibe 12 eingearbeitet ist, auf 90°, die jeweiligen Endstellungen, beschränkt. Die Scheibe 12 weist zusätzlich zwei Ausnehmungen 24 auf, in welche ein als Verlängerung des Hebels 18 ausgestaltetes und als Schaltsperre dienendes Rastelement 25 einrasten kann. Das Rastelement 25 dient als zusätzliche Sicherung gegen ungewolltes Betätigen des Handhebels 11 und stellt gleichzeitig sicher, dass der kugelförmige Verschlusskörper nur im druckausgeglichenen Zustand betätigt werden kann.

Ist die erfindungsgemäße Vorrichtung in eine mit Druck beaufschlagte Rohrleitung eingebaut, so fließt in geöffneter Stellung des Verschlusskörpers 10 das Fluid durch den Leitungsraum 21. Der Dichtring 7 wird vom Dichtkolben 6 durch die im Kolbenringraumbereich 15 befindliche Feder 5 mit ihrer Federkraft an den Verschlusskörper 10 angedrückt. Das Rastelement 25 steht mit der Ausnehmung 24 der Scheibe 12 im Eingriff. Soll die erfindungsgemäße Vorrichtung durch Betätigung des Handhebels 11 verschlossen werden, so muss der Hebel 18 betätigt werden, wodurch das Rastelement 25 aus der Ausnehmung 24 der Scheibe 12 gelöst wird und der Handhebel 11 schaltbar wird. Durch Drehen des Handhebels 11 um 90° wird der Verschlusskörper 10 in seine schließende Position überführt. Zusätzlich zur Federkraft der Feder 5 wirkt der Druck des im Leitungsraum 21 befindlichen Fluids auf die Kolbenringfläche 26 des Dichtkolbens 6. Dadurch wird der Dichtring 7 mit großer Kraft auf den Verschlusskörper 10 gepresst, wodurch eine zuverlässige Abdichtung entsteht.

Nach Beendigung des Schaltvorgangs befindet sich das Rastelement 25 mit der zweiten Ausnehmung 24 der Scheibe 12 im Eingriff. Der Reibschluss zwischen Dichtring 7 und Verschlusskörper 10 ist jetzt so groß, dass durch bloßes Betätigen des Handhebels 11 der Verschlusskörper 10 nicht wieder in die geöffnete Position überführt werden kann.

Soll die erfindungsgemäße Vorrichtung wieder geöffnet werden, also der Verschlusskörper 10 wieder in seine geöffnete Position überführt werden, muss die Intensität des Reibschlusses zwischen Dichtring 7 und Verschlusskörper 10 reduziert werden. Dieses geschieht, indem über die Beaufschlagung der der Kolbenringfläche 26 gegenüberliegenden (gleich großen) Kolbenringfläche 27 ein Druckausgleich hergestellt wird. Die Bohrungen 13 bis 13''' sind ebenso wie der Kolbenringraumbereich 15' bereits mit Fluid gefüllt. Der Kolbenringraumbereich 15 und die Bohrungen 13 und 13'' stehen bereits unter dem in der Rohrleitung herrschenden Druck. Durch Betätigen des Hebels 18 werden die Bohrungen 13' und 13'' und der Kolbenringraumbereich 15' ebenfalls mit dem im Rohrraum 21 herrschenden Druck beaufschlagt. Die auf die Kolbenringflächen 26 und 27 des Dichtkolbens 6 wirkenden Kräfte unterscheiden sich in ihrem Betrag nur um die auf die Kolbenringfläche 26 wirkende Federkraft der Feder 5. Die Reibung zwischen Dichtring 7 und dem Verschlusskörper 10 wird somit nur noch von der Federkraft der Feder 5 erzeugt. Diese ist so dimensioniert, dass das durch den Handhebel 11 eingeleitete und durch die Welle 9 übertragene Drehmoment ausreicht, um den Reibschluss zwischen Dichtring 7 und Verschlusskörper 10 ohne großen Verschleiß im Dichtring 7 zu überwinden. Der Verschlusskörper 10 lässt sich ohne großen Kraftaufwand und ohne Gefahr des Abscherens des Handhebels 11 von der Welle 9 manuell schalten.

## Patentansprüche

1. Vorrichtung zum Absperren von von Fluiden durchströmten Rohrleitungen, insbesondere Hochdruckrohrleitungen, bei der wenigstens ein kugelförmiger Verschlusskörper (10) in einem Gehäuse um eine senkrecht zur Rohrleitung verlaufende Achse drehbar gelagert ist, mit einem Dichtelement (7) zum Abdichten des kugelförmigen Verschlusskörpers (10) gegen die Rohrleitung, wobei um den kugelförmigen Verschlusskörper (10) herum ein beidseitig auf Flächen mit Druck beaufschlagbarer, axial verschiebbarer Dichtkolben (6) angeordnet ist und wobei zur Abdichtung das Dichtelement (7) vom Dichtkolben (6) auf den kugelförmigen Verschlusskörper (10) gepresst wird,
**dadurch gekennzeichnet, dass** die Flächen des Dichtkolbens (6) sich in Ringräumen (15, 15') befindende Stirnflächen (26, 27) sind, dass wenigstens ein Kanal die beiden Ringräume (15, 15') des Dichtkolbens (6) zur Erzeugung eines Gegendruckes auf der gegenüberliegenden Stirnfläche (15') und damit zur Reduzierung des Reibschlusses zwischen Dichtelement (7) und Verschlusskörper (10) miteinander verbindet und mit einem Absperrventil (17) versehen ist.

2. Vorrichtung nach Anspruch 1,
**dadurch gekennzeichnet, dass** das Dichtelement (7) in geöffneter Stellung der Vorrichtung von einer Feder (5) axial gegen den kugelförmigen Verschlusskörper (10) gedrückt wird.

3. Vorrichtung nach Anspruch 1 oder 2,
**dadurch gekennzeichnet, dass** das Absperrventil (17) von einem Hebel (18) betätigt wird.

4. Vorrichtung nach Anspruch 3,
**dadurch gekennzeichnet, dass** der Hebel (18) eine Schaltsperre (25) für den mit dem kugelförmigen Verschlusskörper (10) wirksam verbundenen Betätigungshebel (11) aufweist.

5. Vorrichtung nach Anspruch 4,
**dadurch gekennzeichnet, dass** die Schaltsperre (25) in eine mit dem Betätigungshebel (11) des Verschlusskörpers (10) verbundene Scheibe (12) verrastbar ist.

6. Vorrichtung nach einem der Ansprüche 1 bis 5,
**dadurch gekennzeichnet, dass** Anschlussstücke (3) zum Anschließen der Vorrichtung an Rohrleitungsenden vorhanden sind und dass die Anschlussstücke (3) mit der Vorrichtung verschraubt sind.

7. Vorrichtung nach einem der Ansprüche 1 bis 6,
**dadurch gekennzeichnet, dass** die Vorrichtung einen modularen Aufbau aufweist.

## Claims

1. Apparatus for shutting off pipes through which fluids flow, particularly high pressure pipes, in which at least one spherical obturator (10) in a housing is pivoted about an axis running perpendicular to the pipe, with a sealing element (7) for sealing the spherical obturator (10) against the pipe, wherein an axially displaceable sealing piston (6) with surfaces at both sides that can be exposed to pressure is arranged around the spherical obturator (10) and wherein to provide a seal the sealing element (7) is pressed against the spherical obturator (10) by the sealing piston (6),
**characterised in that** the surfaces of the sealing piston (6) are end surfaces (26, 27) located in annular spaces (15, 15'), **in that** to produce the back pressure on the opposite end surface (15') and hence to reduce the friction between sealing element (7) and obturator (10) at least one channel interconnects the two annular spaces (15, 15') of the sealing piston (6) and is provided with a shutoff valve (17).

2. Apparatus according to claim 1,
**characterised in that** when the apparatus is in the open position the sealing element (7) is pressed axially against the spherical obturator (10) by a spring (5).

3. Apparatus according to claim 1 or 2,
**characterised in that** the shutoff valve (17) is operated by a lever (18).

4. Apparatus according to claim 3,
**characterised in that** the lever (18) has a locking device (25) for the operating lever (11) effectively connected to the spherical obturator (10).

5. Apparatus according to claim 4,
**characterised in that** the locking device (25) can be engaged in a disc (12) connected to the operating lever (11) of the obturator (10).

6. Apparatus according to any one of claims 1 to 5,
**characterised in that** connecting pieces (3) for connecting the apparatus to ends of pipes are present and **in that** the connecting pieces (3) are screwed to the apparatus.

7. Apparatus according to any one of claims 1 to 6,
**characterised in that** the apparatus is modular in design.

## Revendications

1. Dispositif d'arrêt dans des tuyauteries traversées par un écoulement de fluide, en particulier des tuyauteries à haute pression, dans lequel au moins un corps de fermeture (10) sphérique est monté à rotation dans un boîtier, autour d'un axe s'étendant perpendiculairement à celui de la tuyauterie, avec un élément d'étanchéité (7) pour rendre étanche le corps de fermeture (10) sphérique vis-à-vis de la tuyauterie, où autour du corps de fermeture (10) sphérique est disposé un piston d'étanchéité (6) déplaçable axialement, susceptible d'être sollicité par une pression des deux côtés sur des surfaces, et l'élément d'étanchéité (7) étant pressé par le piston d'étanchéité (6) sur le corps de fermeture (10) sphérique pour obtenir la fermeture étanche, **caractérisé en ce que** les faces du piston d'étanchéité (6) sont des faces frontales (26, 27) se trouvant dans des espaces annulaires (15, 15'), **en ce qu'**au moins un canal relie ensemble les deux espaces annulaires (15, 15') du piston d'étanchéité (6), pour produire une contre-pression sur la face frontale (15') opposée et, ainsi, pour réduire la liaison par friction se produisant entre l'élément d'étanchéité (7) et le corps de fermeture (10), et est muni d'une soupape d'isolement (17).

2. Dispositif selon la revendication 1, **caractérisé en ce que** l'élément d'étanchéité (7), en position ouverte du dispositif, est pressé par un ressort (5), axialement, contre le corps de fermeture (10) sphérique.

3. Dispositif selon la revendication 1 ou 2, **caractérisé en ce que** la soupape d'isolement (17) est actionnée par un levier (18).

4. Dispositif selon la revendication 3, **caractérisé en ce que** le levier (18) présente un blocage de manoeuvre (25) pour le levier d'actionnement (11) relié fonctionnellement au corps de fermeture (10) sphérique.

5. Dispositif selon la revendication 4, **caractérisé en ce que** le blocage de manoeuvre (25) est susceptible d'être encliqueté dans un disque (12) relié au levier d'actionnement (11) du corps de fermeture (10).

6. Dispositif selon l'une des revendications 1 à 5, **caractérisé en ce que** des pièces de raccordement (3) sont prévues pour le raccordement du dispositif à des extrémités de tuyauterie, et **en ce que** les pièces de raccordement (3) sont vissées au dispositif.

7. Dispositif selon l'une des revendications 1 à 6, **caractérisé en ce que** le dispositif présente une structure modulaire.
